# EUROPEAN PATENT APPLICATION

(11) **EP 2 469 726 A2**
(43) Date of publication of application: **27.06.2012**
(21) Application number: 10810145.2
(22) Date of filing: 17.08.2010
(51) Int. Cl.: H04B 7/04, H04W 48/08

(54) **METHOD AND SYSTEM FOR TRANSCEIVING GROUP-SPECIFIC INFORMATION IN A COORDINATED MULTI-ANTENNA TRANSCEIVER SYSTEM**

(30) Priority: 18.08.2009 KR 20090076445
(71) Applicant: Pantech Co., Ltd., Seoul, 121-270 (KR)
(72) Inventor: SUH, Sungjin, Seoul 121-270 (KR); YOON, Sungjun, Seoul 121-270 (KR)
(74) Representative: Jordan, Volker Otto Wilhelm
(86) International application number: PCT/KR2010/005427
(87) International publication number: WO 2011/021837

(57) **Abstract**

The present description relates to a method for transceiving dedicated group-specific information for a coordinated multi-antenna transceiver service in a coordinated multi-antenna transceiver system. The present description relates to a scheme for configuring and transmitting group-specific information of a base station for a coordinated multi-antenna transceiver system, and to a scheme for transmitting an uplink reference signal using group-specific information of user equipment for the thus-configured coordinated multi-antenna transceiver system. Here, the group-specific information is UE-specific in the event the information varies in accordance with a portion of user equipment in a cell or in accordance with the characteristics of user equipment.

## Description

### Technical Field

The present invention relates to a wireless communication system. Especially, the present invention discloses a method and a system for transmitting and receiving information for a coordinated multi-antenna transceiver service in a coordinated multi-antenna transceiver system.

### Background Art

With the development of a communication system, consumers, such as enterprises and individuals, have used highly various wireless terminals.

Accordingly, communication service providers continuously attempt to create a new communication service market for the wireless terminals and provide a service having a low price but high reliability to expand a conventional communication service market.

### Disclosure

### Technical Problem

Therefore, the present invention has been made in view of the above-mentioned problems, and the present invention provides a method and a system for transmitting uplink reference signals, which can remove the interference with an adjacent cell and can prevent the performance degradation of other users not receiving a coordinated multi-antenna transmission/reception service at the time of transmitting uplink reference signals in a coordinated multi-antenna transmission/reception system.

Also, the present invention provides a method and a system for transmitting group-specific information for a coordinated multi-antenna transmission/reception service in a wireless communication system.

Further, the present invention provides a method and a system for constructing group-specific information for a coordinated multi-antenna transmission/reception service of a base station in a coordinated multi-antenna transmission/reception system.

Moreover, the present invention provides a method and a system for transmitting group-specific information for a coordinated multi-antenna transmission/reception service of a base station in a coordinated multi-antenna transmission/reception system.

In addition, the present invention provides a method and a system for receiving group-specific information for a coordinated multi-antenna transmission/reception service of a base station in a coordinated multi-antenna transmission/reception system.

Furthermore, the present invention provides a method and a system for transmitting uplink reference signals for a coordinated multi-antenna transmission/reception service of a base station in a coordinated multi-antenna transmission/reception system.

Also, the present invention provides a method and a system for discriminately constructing group-specific information for a coordinated multi-antenna transmission/reception service of a base station and group-specific information supporting typical services in a coordinated multi-antenna transmission/reception system.

### Technical solution

In accordance with an aspect of the present invention, there is provided a method of transmitting group-specific information by a base station in a multi-antenna transmission/reception system, the method including: discriminating between a cell in which a User Equipment (UE) receiving a coordinated multi-antenna transmission/reception service enabling a communication with two or more base stations is located and another cell in which another UE not receiving the coordinated multi-antenna transmission/reception service is located; and transmitting different pieces of group-specific information identified by different codes to UEs located in corresponding cells by the cell in which the UE receiving the coordinated multi-antenna transmission/reception service is located and by said another cell in which said another UE not receiving the coordinated multi-antenna transmission/reception service is located, respectively.

In accordance with another aspect of the present invention, there is provided a multi-antenna transmission/reception system including: a serving base station to discriminate between a cell in which a User Equipment (UE) receiving a coordinated multi-antenna transmission/reception service enabling a communication with two or more base stations is located and another cell in which another UE not receiving the coordinated multi-antenna transmission/reception service is located, and to transmit different group-specific information, which is identified by codes different from codes of group-specific information of said another UE not receiving the coordinated multi-antenna transmission/reception service, to the UE receiving the coordinated multi-antenna transmission/reception service; and the UE to transmit an uplink reference signal to the serving base station through a predetermined frequency band at a particular subframe determined by the different group-specific information.

In accordance with another aspect of the present invention, there is provided a method of receiving group-specific information of a base station by a User Equipment (UE) in a multi-antenna transmission/reception system, the method including: receiving group-specific information from a base station by a first UE receiving a coordinated multi-antenna transmission/reception service enabling a communication with two or more base stations; and generating an uplink reference signal by using the group-specific information and transmitting the uplink reference signal by the first UE, wherein the group-specific information received by the first UE is discriminated from group-specific information received by a second UE not receiving the coordinated multi-antenna transmission/reception service.

In accordance with another aspect of the present invention, there is provided a method of transmitting parameters by a first base station transmitting or receiving data to or from a plurality of UEs in a coordinated multi-antenna transmission/reception system, the method including: transmitting a first parameter required for generation of a reference signal to be transmitted by a first UE, which will transmit or receive data to or from the first base station, to the first UE by the first base station; transmitting a second parameter required for generation of a reference signal to be transmitted by a second UE, which will transmit or receive data to or from the first base station and a second base station, to the second UE by the first base station; receiving a first reference signal generated based on the first parameter from the first UE by the first base station; and receiving a second reference signal, which is generated based on the second parameter and is different from the first reference signal, from the second UE by the first base station.

In accordance with another aspect of the present invention, there is provided a method of transmitting reference signals by a UE transmitting or receiving data to or from one or more base stations in a coordinated multi-antenna transmission/reception system, the method including: receiving a first parameter, required for generation of a reference signal by a first base station, from the first base station; generating and transmitting a first reference signal generated based on the first parameter; receiving a second parameter different from the first parameter from the first base station or a second base station in order to transmit or receive data to or from the first base station and the second base station; and generating and transmitting a second reference signal generated based on the second parameter.

In accordance with another aspect of the present invention, there is provided a method of transmitting reference signals in a coordinated multi-antenna transmission/reception system, the method including: receiving a first parameter required for generation of a reference signal from a first base station or a second base station; generating and transmitting a first reference signal generated based on the first parameter; transmitting and receiving data to and from the first base station and the second base station; receiving a second parameter different from the first parameter from the first base station; and generating and transmitting a second reference signal generated based on the second parameter.

In accordance with another aspect of the present invention, there is provided a method of transmitting parameters in a coordinated multi-antenna transmission/reception system, the method including: transmitting a first parameter, required for generation of a reference signal to be transmitted by a first UE and a second UE, to the first UE and the second UE by a first base station; detecting, by the first base station, that the first UE receives a coordinated multi-antenna transmission/reception service; transmitting a second parameter, required for generation of a reference signal to be transmitted by a second UE, to the second UE by the first base station; receiving a first reference signal generated based on the first parameter from the first UE by the first base station; and receiving a second reference signal, which is generated based on the second parameter and is different from the first reference signal, from the second UE by the first base station.

### Brief Description of the Drawings

The foregoing and other objects, features and advantages of the present invention will become more apparent from the following detailed description when taken in conjunction with the accompanying drawings in which:
FIG. 1 is a view illustrating a wireless communication system to which embodiments of the present invention are applied;
FIG. 2 is a view showing the concept of a coordinated multi-point transmission/reception system;
FIG. 3 illustrates structures of subframes including uplink reference signals in a wireless communication system;
FIG. 4 is graphs showing the concept of a time division scheme, which uses different subframes for transmission of an SRS for two cells so as to prevent transmission of the SRS at the same time between the two cells adjacent to each other on a time axis;
FIG. 5 is a view illustrating the structure of a system for transmitting an SRS in a coordinated multi-point transmission/reception system;
FIG. 6 is a view illustrating the structure of a system transmitting an SRS by using a virtual cell in a coordinated multi-point transmission/reception system according to the present invention; and
FIG. 7 illustrates an example of lists for discriminating between typical UEs and UEs receiving a coordinated multi-antenna transmission/reception service.

### Best Mode

### Mode for Invention

Hereinafter, exemplary embodiments of the present invention will be described in detail with reference to the accompanying drawings. It should be noted that in assigning reference numerals to elements in the drawings, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be understood that if it is described in the specification that one component is "connected," "coupled" or "joined" to another component, a third component may be "connected," "coupled," and "joined" between the first and second components, although the first component may be directly connected, coupled or joined to the second component.

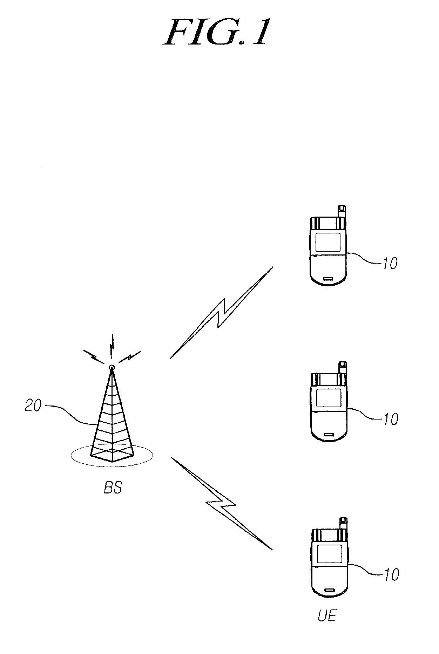

FIG. 1 is a view illustrating a wireless communication system to which embodiments of the present invention are applied.

Wireless communication systems are widely distributed in order to provide various communication services, such as a voice communication service or a packet data service.

Referring to FIG. 1, a wireless communication system includes a User Equipment (UE) 10 and a Base Station (BS) 20. The UE 10 and the BS 20 use various power allocation methods as described below.

The UE 10 in this specification has a generic concept implying a user terminal in wireless communication, and should be interpreted to have a concept including all of a MS (Mobile Station), a UT (User Terminal), a SS (Subscriber Station), and a wireless device in a GSM as well as a UE (User Equipment) in a WCDMA, a LTE, and an HSPA.

In general, the BS 20 or a cell refers to a fixed station communicating with the UE 10, and may be referred to as other terms, such as a Node-B, an evolved Node-B (eNB), a BTS (Base Transceiver System), and an access point.

That is, the BS 20 or cell in the present specification should be interpreted as having a generic concept indicating some areas covered by a BSC (Base Station Controller) in a CDMA and a Node-B in a WCDMA, and corresponds to a concept including all of various coverage areas including communication ranges of a mega cell, a macro cell, a micro cell, a pico cell, and a femto cell.

The UE 10 and the BS 20 in the present specification are used as having a generic meaning corresponding to transmitting and receiving subjects used to implement a technology or a technological idea described in the present disclosure, and they are not limited by a specifically designated term or word.

Multiple access schemes applicable to a wireless communication system have no limitation, and the wireless communication system can use various multiple access schemes such as a CDMA (Code Division Multiple Access), a TDMA (Time Division Multiple Access), an FDMA (Frequency Division Multiple Access), an OFDMA (Orthogonal Frequency Division Multiple Access), an OFDM-FDMA, an OFDM-TDMA, and an OFDM-CDMA.

A downlink transmission and an uplink transmission may employ either a Time Division Duplex (TDD) scheme in which the transmission is performed using different times, or a Frequency Division Duplex (FDD) scheme in which the transmission is performed using different frequencies.

A power allocation scheme according to an embodiment of the present invention may be applied to resource allocations of asynchronous wireless communication evolving into an LTE (Long Term Evolution) and an LTE-advanced via a GSM, a WCDMA, and an HSPA, and synchronous wireless communication evolving into a CDMA, a CDMA-2000, and a UMB.

The present invention should not be interpreted to be limited and restricted to a specific wireless communication field, but should be interpreted to include all technical fields, to which ideas of the present invention can be applied.

In the beyond 3G communication technology, which is currently in discussion, a UE transmits a reflection signal, which is similar to a pilot used in the conventional 2G system, in an uplink, thereby transferring uplink channel information to a BS. The reflection signal may be selected for an operation in various modes according to a cycle, a frequency bandwidth, a start point, a hopping pattern, etc., which are determined by cell-specific or UE-specific parameters. The cell-specific parameters are parameters for discrimination between base stations and the UE-specific parameters are parameters for discrimination between users.

Among them, the frequency bandwidth, the cycle, the subframe configuration of an uplink reference signal, which are being discussed for the current LTE, are determined by the cell-specific parameters, and all UEs belonging to a certain cell receive the same parameters and operate in a mode determined by the received cell-specific parameters.

Further, the beyond-3G communication technology, which is currently in discussion, includes a coordinated multi-point transmission/reception system (CoMP) or a coordinated multi-antenna transmission system. In the coordinated multi-point transmission/reception system, when a plurality of base stations tries to provide a coordinated transmission/reception service, they provide the service by allocating the same frequency resource at the same time.

In the coordinated multi-point transmission/reception system as described above, when a base station and a UE transmit and receive coordinated data, they use the same frequency resources, which are allocated at the same time. That is, a plurality of base stations selected as coordinated base stations at the same time transmit and receive data to and from one user by using the same frequency resource.

The UEs using such a communication scheme may be UEs, which are located in a boundary area between cells and thus have a signal intensity weaker than that of the UEs located at a central area of a cell. Further, these UEs are located relatively near to another base station and may thus receive signals from a plurality of base stations. If a plurality of base stations transmit signals to such UEs in a coordinated manner, it is possible to obtain a performance better than that obtained by the existing method in which such UEs receive signals from only one base station.

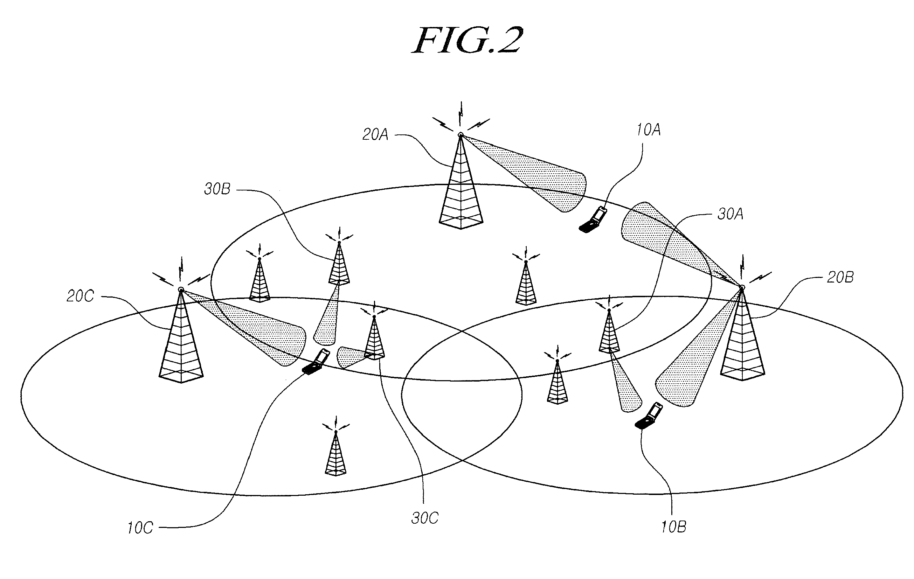

FIG. 2 is a view showing the concept of a coordinated multi-point transmission/reception system.

In the coordinated multi-point transmission/reception system as shown in FIG. 2, which has been advanced from the technology in which one UE is connected to one base station and transmits or receives data to or from the base station, a UE may transmit or receive data to or from one or more base stations in a coordinated manner, so as to achieve a higher data efficiency and a higher quality of service.

Referring to FIG. 2, one UE 10A may be simultaneously connected to and receive services from two or more BSs 20A and 20B, or may be connected to and receive services from a BS having the best channel condition based on periodically reported channel states of multiple BSs 20A and 20B.

A wireless communication system may have a relay or relay node 30A or 30B between the UE 10 and the BS 20. The relay node 30A or 30B may have its own physical identification information (identifier; ID), may transmit its own synchronization channels and reference symbols or reference signals, does not have a separate cell ID, and cannot generate a new cell.

Further, another UE 10B may be simultaneously connected to and receive services from another BS 20B and one relay 30A. In addition, another UE 10C may be simultaneously connected to and receive services from one BS 20C and two or more relays 30B and 30C. In the following description, the coordinated relays 30A and 30B are also considered as kind of coordinated BSs.

The UEs 10A, 10B, and 10C and the BSs 20A, 20B, and 20C shown in FIG. 2 correspond to the UE 10 and the BS 20 shown in FIG. 1. Therefore, the UEs are indicated by reference numerals 10A, 10B, and 10C when it is necessary to discriminate between them and are indicated by reference numeral 10 when it is not necessary to discriminate between them. In the same way, the BSs are indicated by reference numeral 20 when it is not necessary to discriminate between them, and the relays are indicated by reference numeral 30 when it is not necessary to discriminate between them.

Further, at the time of beam forming or precoding, while a beam formation or precoding value has been set in consideration of only the channel state with the BS currently providing a service in the conventional system, the beam formation or precoding value may be set based on estimation values or estimated interference values of channel states with surrounding BSs in the coordinated multi-point transmission/reception system.

When the BS 20 and the UE 10 transmit and receive data in a coordinated multi-point transmission/reception system, they are allocated the same frequency resources at the same time and use the frequency resources for transmission and reception. That is, multiple BSs 20A and 20B selected as coordinated base stations at the same time transmit and receive data to and from one UE 10A through the same frequency resource.

Therefore, the BSs selected as coordinated BSs should be BSs having a good channel performance for a certain frequency band in relation to one UE.

The UE 10 can obtain a channel state of each antenna of each BS 20 by analyzing the reference signal forwarded from each BS 20. After obtaining each channel state, the UE 10 directly or indirectly feeds back the information to each BS 20. Upon receiving the fed back information, the BS 20 or a higher layer forms a coordinated BS set by selecting BSs (e.g. 20A and 20B of FIG. 2) showing a good channel performance, and the BSs included in the coordinated BS set begin to perform coordinated transmission and reception.

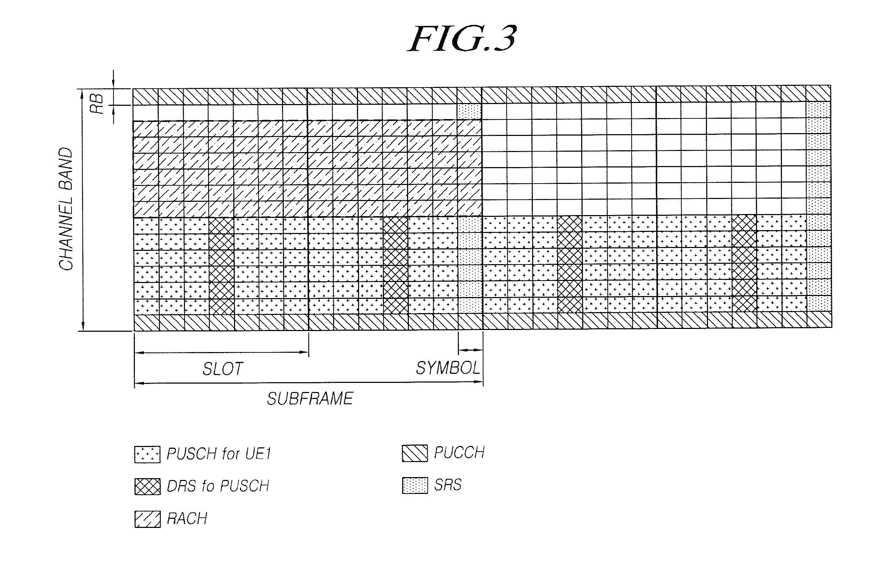

FIG. 3 illustrates structures of subframes including uplink reference signals in a wireless communication system.

Referring to FIG. 3, the reference signals allocated to subframes may include a Demodulation Reference Signal (DRS) and a Sounding Reference Signal (SRS). The SRS is a kind of uplink reference signal for a UE to transfer uplink channel information to a BS in a wireless communication system.

The SRS as described above is required to be capable of transferring uplink channel information on all bands including not only bands to be used by each UE but also bands which may be used by the UE. That is, a UE should transmit the SRS to a BS over all the subcarrier bands.

As shown in FIG. 3, the SRS may be transmitted once at each subframe, or may be transmitted once at every N subframes or k times at every N subframes according to the cell-specific parameters. A frequent transmission of the SRS may refer to an environment in which the channel state changes as rapidly as necessary to more rapidly obtain the information on the uplink channel. In contrast, an infrequent transmission of the SRS may imply that there is no big channel change and a frequent transmission of the SRS is thus unnecessary.

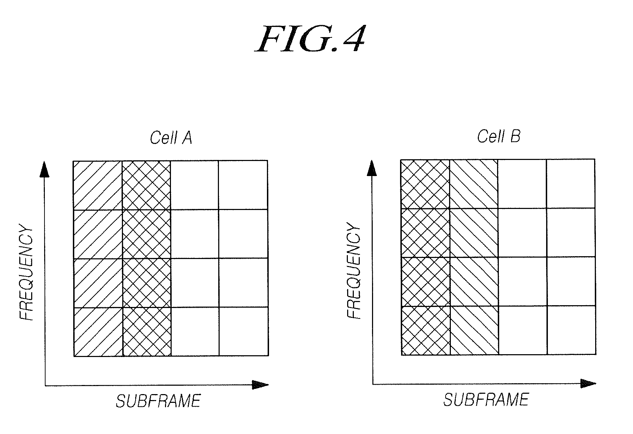

FIG. 4 is graphs showing the concept of a time division scheme, which uses different subframes for transmission of an SRS for two cells so as to prevent transmission of the SRS at the same time between the two cells adjacent to each other on a time axis. UE1 through UE5 and cell A through cell C in FIG. 4 correspond to the UEs 10A, 10B, and 10C and the BSs 20A, 20B, and 20C shown in FIG. 2.

Referring to FIG. 4, in transmitting the SRS having been time-divided between adjacent cells, cell B transmits no signal at a subframe position at which cell A transmits the SRS and cell A transmits no signal at a subframe position at which cell B transmits the SRS, so as to prevent the occurrence of interference between the adjacent cells.

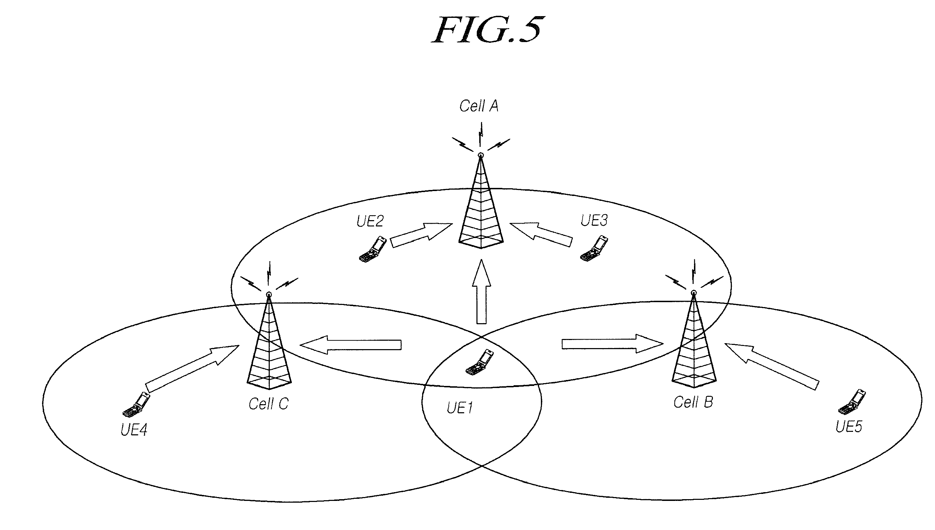

Meanwhile, UE1 through UE5 and cell A through cell C in FIG. 5 correspond to the UEs 10A, 10B, and 10C and the BSs 20A, 20B, and 20C shown in FIG. 2.

In the present invention, schemes for transmitting an SRS without any interference between adjacent cells include not only the time division scheme but also a frequency division scheme and a code division scheme. The frequency division scheme refers to a scheme in which frequency resources for transmission of reference signals are allocated in a properly discriminated manner so as to enable each UE to transmit a reference signal through all predetermined bands while preventing adjacent cells from using the same frequency resources for transmission. Further, the code division scheme refers to a scheme of identifying reference signals by codes so as to prevent the occurrence of interference between adjacent cells.

FIG. 5 is a view illustrating the structure of a system for transmitting an SRS in a coordinated multi-point transmission/reception system.

Referring to FIG. 5, based on an assumption that a serving cell (a base station, which transmits a control signal, among the three coordinated base stations, and an example of the control signal may be a control signal including a PDCCH) of UE1 is cell A, UE1 receives a group-specific parameter transmitted from cell A and transmits an uplink reference signal (e.g. SRS) in consideration of the group-specific parameter. At this time, since not only UE1 but also all UEs (including UE2 and UE3) belonging to cell A receive the same group-specific parameter, they transmit the same uplink reference signal in view of the part determined by the group-specific parameter of cell A.

The group-specific parameter refers to a predetermined parameter or a value within a predetermined parameter group allocated to a group of UEs. By allocating parameters within one group to UEs within the same cell, it is possible to set one group-specific parameter to the cell. Further, it is possible to set a separate group for UEs receiving a CoMP service although they are within the same cell and then set another group-specific parameter to the separate group.

Therefore, the group-specific parameter is cell-specific when it is commonly applied to the entire cell, and is UE-specific when it is applied to only some UEs in the cell or differently applied to UEs according to the characteristics of the UEs.

Here, cell B and cell C may send down group-specific information properly set in accordance with average characteristics of the UEs currently belonging to themselves. If necessary, cell B and cell C may send down group-specific information, which least degrades the performances of the UEs belonging to themselves, within a range in which the time, frequency, or code resources of them do not overlap with those of cell A.

By the same reason, cell A should send down group-specific information, which can reduce the interference with an adjacent cell, that is, which can prevent overlapping of resources with those of the adjacent cell, due to UE1 to which the coordinated multi-antenna transmission/reception technique is applied. Therefore, cell A has considerable restrictions in selecting the group-specific information.

Such restrictions may degrade the performances of other UEs (UE2 and UE3) which do not receive the coordinated multi-antenna transmission/reception service. This is because UE2 and UE3 can receive the restriction-less group-specific information as described above and send an uplink reference signal based on the group-specific information, if UE1 does not exist.

In more detail, UE1 is a UE receiving the coordinated multi-antenna transmission/reception service, while the other UEs (UE2, UE3, UE4, and UE5) are UEs which do not receive the coordinated multi-antenna transmission/reception service. It is assumed that a base station exchanging data with UE2 and UE3 is a first base station and a base station exchanging data with UE5 is a second base station. On an assumption that UE1 receives a coordinated multi-antenna transmission/reception service from the first base station and the second base station, UE1 needs to transmit or receive a reference signal different from reference signals of UE2, UE3, and UE5. Here, the first base station and the second base station correspond to base stations constructing the coordinated multi-point transmission/reception system.

Therefore, the first base station or the second base station is required to allocate a parameter necessary for generation of a reference signal, which is different from parameters of UE2, UE3, and UE5, to UE1, so that UE1 can transmit the different reference signal.

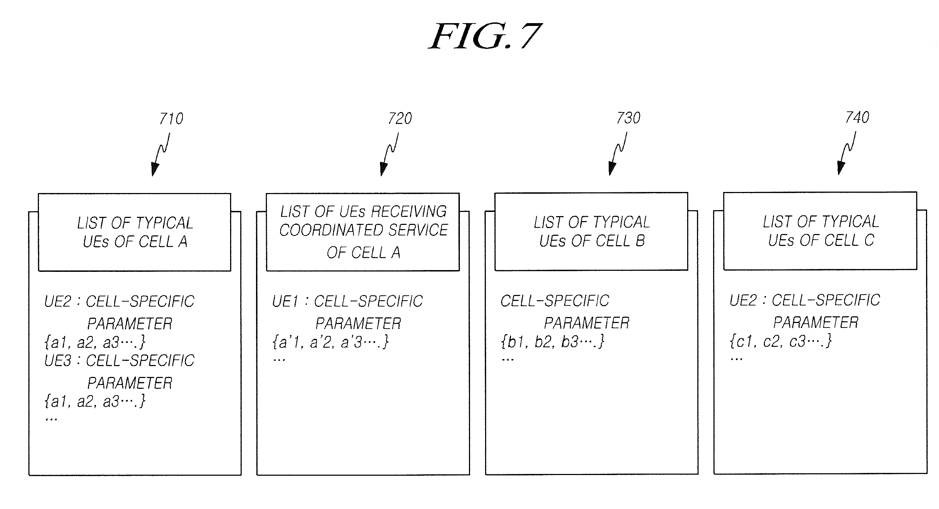

The first base station transmits a first parameter, which is necessary for generation of a reference signal to be transmitted by UE2 and UE3 which will transmit or receive data to or from the first base station, to UE2 and UE3. Further, in order to enable UE1, which will transmit or receive data to or from the first base station and the second base station, to generate a reference signal different from the reference signal of UE2 and UE3, the first base station transmits a second parameter different from the first parameter to UE1. This configuration includes the embodiment shown in FIG. 7. Further, the first base station receives a first reference signal generated by the first parameter from UE2 and UE3. Further, the first base station and the second base station receive a second reference signal, which is generated by the second parameter and is different from the first reference signal, from UE1.

In order to enable UE1 to transmit a reference signal different from that of UE2, UE3, and UE5, the first base station may receive information necessary for determining the second parameter from the second base station, and the first base station may notify the second base station of which parameter has been set as the second parameter.

In this event, the second base station may set parameter information necessary for generation of the reference signal by UE5 as information necessary for determining of the second parameter and then provide the set information. Then, the first base station can identify the parameter information necessary for generation of the reference signal by UE5 and select a parameter, which does not interfere with UE5, as the second parameter.

As a result of using the first parameter and the second parameter different from each other, the first reference signal and the second reference signal have at least one different item among the code, the frequency, and the time, so that UE1 and UE2, UE3, and UE5 can transmit reference signals without an interference between them. According to an embodiment of the present invention, a base station can set the first parameter and the second parameter as parameters belonging to different code resource groups. The first base station or the second base station may operate as a relay.

In view of UE1, i) if UE1 switches from a state in which it transmits or receives data to or from the first base station to a state in which UE1 receives the coordinated multi-antenna transmission/reception service and thus transmits or receives data to or from the first base station and the second base station, UE1 may generate a reference signal that is different from the reference signal used by the first base station, and then transmit the reference signals to the first base station and the second base station. This is the same ii) in the case in which UE1 switches from a state in which UE1 transmits or receives data to or from the first base station and the second base station by using the coordinated multi-antenna transmission/reception technique to a state in which UE1 transmits or receives data to or from only the first base station.

First, the case of i) will be discussed.

UE1 receives the first parameter necessary for generation of a reference signal from the first base station, and generates and transmits the first reference signal generated using the first parameter. Further, as UE1 comes to receive a coordinated multi-antenna transmission/reception service from the first base station and the second base station, UE1 receives the second parameter different from the first parameter from the first base station or the second base station, and generates and transmits the second reference signal by using the second parameter.

The inverse case of ii) will be now discussed. As UE1 receives a coordinated multi-antenna transmission/reception service, UE1 receives the first parameter necessary for generation of a reference signal from the first base station or the second base station, and generates and transmits the first reference signal generated using the first parameter. Further, according to the coordinated multi-antenna transmission/reception service, UE1 transmits or receives data to or from the first base station and the second base station. Thereafter, UE1 stops receiving the coordinated multi-antenna transmission/reception service and transmits or receives data to or from only the first base station. To this end, UE1 receives the second parameter different from the first parameter from the first base station, and generates and transmits the second reference signal by using the second parameter.

If UEs receiving the same reference signal from a single base station include many UEs receiving a coordinated multi-antenna transmission/reception service, it is possible to change a parameter necessary for generation of a reference signal by a UE that does not receive the coordinated multi-antenna transmission/reception service.

As a simple example, based on an assumption that it has been set that UEs of cell A are allowed to send an uplink reference signal only in the first subframe during five subframes in order to prevent resource overlapping with an adjacent cell for users receiving a coordinated multi-antenna transmission/reception service, all UEs (UE1, UE2, and UE3) located within cell A can send one uplink reference signal at every five subframes according to the group-specific information set by cell A.

However, if UEs (UE4 and UE5) of cell B and cell C allocate uplink reference signals to the second and the third or the third and the fourth subframes of the every five subframes, UEs (UE4 and UE5) of cell B and cell C can send uplink reference signals twice as frequently as UEs (UE1, UE2, and UE3) of cell A.

This may directly influence the performance. The above example can be observed when the frequency or code resources are divided and used.

In summary, the existing uplink reference signal need not reflect the interference between adjacent cells. However, according to the introduction of a coordinated multi-antenna transmission/reception system, it has become necessary for a single UE to simultaneously send the same reference signal to adjacent cells, which may cause interference between the adjacent cells.

In order to solve this problem, the present invention proposes a scheme for division and use of time, frequency, or code resources between adjacent cells, which can reduce the interference between the adjacent cells.

Although the enhanced reference signal transmission scheme as described above may generate a gain for a user to which a coordinated multi-antenna transmission/reception technique is applied, it may cause a performance degradation to other users within the same cell. In order solve this problem, the following description presents a scheme for discriminating between a UE to which a coordinated multi-antenna transmission/reception technique is applied and a UE to which a coordinated multi-antenna transmission/reception technique is not applied.

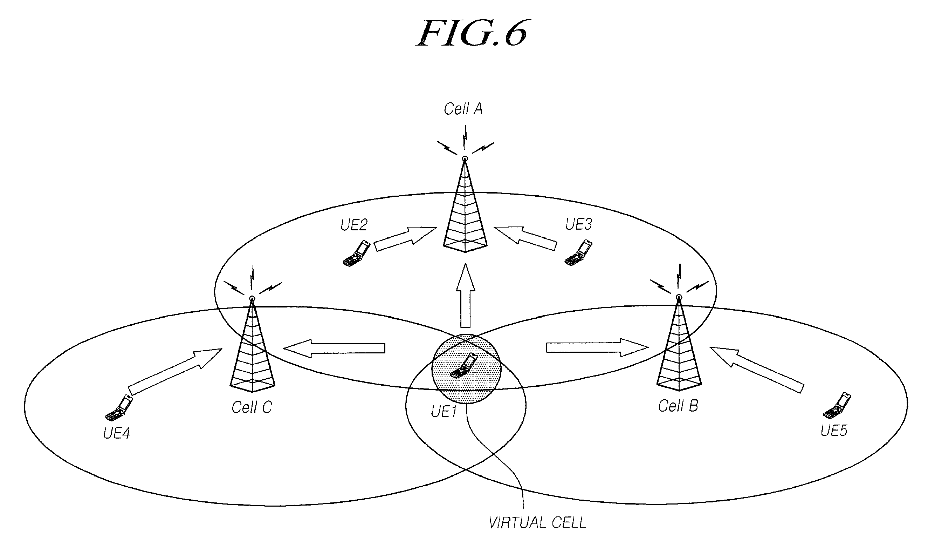

FIG. 6 is a view illustrating the structure of a system transmitting an SRS by using a cell supporting a coordinated transmission/reception service in a coordinated multi-point transmission/reception system according to the present invention. The coordinated multi-antenna transmission/reception system shown in FIG. 6 is nearly identical to the coordinated multi-antenna transmission/reception system shown in FIG. 5.

However, the coordinated multi-antenna transmission/reception system shown in FIG. 6 is identical in view of system to but may be different in view of operation from the coordinated multi-antenna transmission/reception system shown in FIG. 5 in that the system shown in FIG. 6 may include a kind of virtual cell corresponding to a logical cell, which is not physically identified at all but is identified just for discrimination and transmission of group-specific parameters.

In more detail, in order to support a coordinated multi-antenna transmission/reception service for UE1, cell A may set cell A, cell B, and cell C as a coordinated set. That is, upon receiving feedback information on the signal transmitted from each base station from the UE, cell A sets cell A, cell B, and cell C as a coordinated set. Otherwise, cell A may receive coordinated BS set information formed by selecting base stations having a good channel performance by a higher layer, and then may set cell A, cell B, and cell C as a coordinated set, based on the coordinated BS set information. FIG. 7 illustrates an example of lists for discriminating between typical UEs and UEs receiving a coordinated multi-antenna transmission/reception service.

Referring to FIG. 7, cell A generates the lists while separating UE1 from the existing UEs (UE2 and UE3) and identifying UE1 as a UE receiving a coordinated multi-antenna transmission/reception service (720).

Cell A generates group-specific parameters {a'1, a'2, a'3, ...} for UE1 or a user receiving the coordinated service by exchanging information with adjacent cells (cell B and cell C), so as to enable transmission of uplink reference signals while preventing the overlapping of resources between them. The group-specific parameters {a'1, a'2, a'3, ...} 720 for UE1 or a user receiving the coordinated service correspond to a parameter set of group-specific parameters, which are allocated to the cell providing the coordinated multi-antenna transmission/reception service and are transmitted to the corresponding UE (UE1). The parameter set 720 for a user receiving the coordinated multi-antenna transmission/reception service may be either equal to or different from the existing parameter set {a1, a2, a3, ...} of cell A. Thereafter, cell A transmits the newly generated parameter set 720 to UE1.

Meanwhile, cell A transmits the existing parameter set {a1, a2, a3, ...} 710 or a partly modified parameter set thereof to the other UEs (UE2 and UE3). That is, the existing parameter set {a1, a2, a3, ...} 710 transmitted to the other UEs (UE2 and UE3) corresponds to a parameter set of group-specific parameters transmitted to corresponding users existing only within the service area of cell A.

Thereafter, upon receiving the group-specific information 720 for the user receiving the coordinated multi-antenna transmission/reception service from cell A, UE1, which is located within the coordinated multi-antenna transmission/reception service area, transmits an uplink reference signal according to the received group-specific information 720. Thus, the uplink reference signal transmitted from UE1 is received and processed by not only cell A but also cell B and cell C supporting the same coordinated multi-antenna transmission/reception service.

Meanwhile, UE4 and UE5, which have received group-specific parameters {b1, b2, b3, ...} 730 and {c1, c2, c3, ...} 740 from cell B and cell C, respectively, transmit uplink reference signals according to the group-specific parameters received from the corresponding cells, respectively.

In other words, corresponding UEs belonging to service areas of cell A, cell B, and cell C transmit uplink reference signals according to the existing uplink reference signal transmission scheme without a big change, respectively. In the meantime, UE1 receiving the coordinated multi-antenna transmission/reception service according to the present invention is considered as being located within a dedicated cell for the coordinated multi-antenna transmission/reception service and transmits an uplink reference signal according to a newly configured group-specific information based on the consideration.

According to an embodiment of the present invention, the group-specific parameters may include frequency information (e.g. frequency bandwidth), cycle, subframe configuration, etc. for transmission of an uplink reference signal. The present invention is not limited to the enumerated information elements. An embodiment of the present invention enables UEs receiving a coordinated multi-antenna transmission/reception service and UEs that do not receive the coordinated multi-antenna transmission/reception service to transmit different parameters. For example, reference signals are subjected to a frequency division, time division, or code division, so that they can be transmitted without interference between them. Of course, the reference signals may be grouped as described above with reference to FIG. 7.

The group-specific parameters are parameters necessary for generation of uplink reference signals by a UE, and uplink reference signals are subjected to a frequency division, time division, or code division, so that they can be transmitted without interference between them. In this event, a UE located within an area (cell) in which service areas of two or more base stations overlap each other is determined as a UE of a special cell for transmission and reception of a coordinated multi-antenna transmission/reception service according to the present invention and receives independent group-specific parameters for the coordinated multi-antenna transmission/reception service. That is, it can be said that the group-specific parameters are cell-specific when they are commonly applied to the entire cell and are UE-specific when they are applied to only some UEs in the cell or differently applied to UEs according to the characteristics of the UEs.

For example, if neither of the UEs (UE1 through UE5) belonging to cell A, cell B, and cell C receive a coordinated multi-antenna transmission/reception service, cell A, cell B, and cell C classify the UEs (UE1 through UE5) belonging to cell A, cell B, and cell C as general UEs and generate lists of them, respectively. Then, each of cells A, B, and C transmit down a group-specific parameter generated by itself to corresponding UEs (one or more of UE1 through UE5) in its own service area. The corresponding UEs (one or more of UE1 through UE5) having received the group-specific parameter from cell A, cell B, or cell C transmit uplink reference signals according to the received group-specific parameter.

In more detail, a case in which group-specific parameters include a cycle of an uplink reference signal will be described as an example.

In this event, the UEs (UE1, UE2, and UE3) belonging to cell A allocate uplink reference signals to the first and second subframes of every five subframes and then transmit the reference signals to cell A, and the UEs (UE4 and UE5) of cell B and cell C allocate uplink reference signals to the second and the third or the third and the fourth subframes of the every five subframes and then transmit the reference signals to cell B and cell C.

Then, if UE1 belonging to cell A comes to receive a coordinated multi-antenna transmission/reception service as shown in FIG. 6, that is, if UE1 moves from the service area of cell A to an area capable of supporting the services of cell A, cell B, and cell C, when UE1 transmits uplink reference signals through the first and second subframes of every five subframes, it may cause an interference with an uplink reference signal of UE4, which belongs to cell B and transmits the reference signal at the second subframe.

Therefore, cell A transmits down a cycle of uplink reference signals, which can prevent any of UEs (UE1, UE2, and UE3) belonging to cell A from causing an interference with UEs of other base stations, to UE1. That is, cell A includes only UE1 in a coordinated multi-antenna transmission/reception list and transmits a group-specific parameter capable of preventing an interference with UEs of other base stations, i.e. a cycle of uplink reference signals, which indicates transmission of an uplink reference signal at the first subframe of every five subframes, to UE1.

In this event, cell A may determine the parameter to be used by UE1 by receiving information necessary for determining the parameter from another base station, and transmit the determined parameter back to said another base station.

As a result, UE1 can transmit uplink reference signals (e.g. SRSs) to cell A, cell B, and cell C.

Meanwhile, in contrast to the scheme described above, instead of transmitting newly defined group-specific parameters to UE1, it is possible to transmit newly defined group-specific parameters to UE2 and UE3. That is, in a situation in which cell A, cell B, and cell C are transmitting uplink reference signals discriminated for reception of a coordinated multi-antenna transmission/reception service, UE1 can transmit the uplink reference signal without a big change. In this event, if it is desired to change the uplink reference signal transmission scheme of UE2 and UE3 belonging to cell A, instead of transmitting newly defined group-specific parameters to UE1, it is possible to transmit newly defined group-specific parameters to UE2 and UE3, which can improve the performance of UE2 and UE3.

The embodiment described above discusses a method in which a base station transmits group-specific information while discriminating between a UE receiving a coordinated multi-antenna transmission/reception service and typical UEs not receiving the coordinated multi-antenna transmission/reception service, so as to prevent degradation of performance of the typical UEs not receiving the coordinated multi-antenna transmission/reception service in the case of using divided frequency, time, or code in order to remove the interference between adjacent cells in transmitting uplink reference signals in a coordinated multi-antenna transmission/reception system.

This embodiment can realize the existing uplink reference signal transmission scheme with the least amount of corrections without causing the performance degradation.

Although the above description is based on embodiments, the present invention is not limited to those embodiments. In the embodiment described above, uplink reference signals are discussed as an example of different pieces of group-specific information transmitted to a UE receiving a coordinated multi-antenna transmission/reception service and UEs not receiving the coordinated multi-antenna transmission/reception service. However, the present invention is not limited to the discussed example.

### CROSS-REFERENCE TO RELATED APPLICATION

This application claims priority from and the benefit under 35 U.S.C. §119(a) of Korean Patent Application No. 10-2009-0076445, filed on August 18, 2009, which is hereby incorporated by reference for all purposes as if fully set forth herein. In addition, this application claims priority in countries, other than the U.S., with the same reason based on the Korean Patent Application, which is hereby incorporated by reference for all purposes as if fully set forth herein.

## Claims

1. A method of transmitting group-specific information by a base station in a multi-antenna transmission/reception system, the method comprising:
discriminating between a cell in which a User Equipment (UE) receiving a coordinated multi-antenna transmission/reception service enabling a communication with two or more base stations is located and another cell in which another UE not receiving the coordinated multi-antenna transmission/reception service is located; and
transmitting different pieces of group-specific information identified by different codes to UEs located in corresponding cells by the cell in which the UE receiving the coordinated multi-antenna transmission/reception service is located and by said another cell in which said another UE not receiving the coordinated multi-antenna transmission/reception service is located, respectively.

2. The method of claim 1, further comprising transmitting different pieces of group-specific information identified by different times to UEs located in corresponding cells by the cell in which the UE receiving the coordinated multi-antenna transmission/reception service is located and by said another cell in which said another UE not receiving the coordinated multi-antenna transmission/reception service is located, respectively.

3. The method of claim 1, further comprising transmitting different pieces of group-specific information identified by different frequencies to UEs located in corresponding cells by the cell in which the UE receiving the coordinated multi-antenna transmission/reception service is located and by said another cell in which said another UE not receiving the coordinated multi-antenna transmission/reception service is located, respectively.

4. The method of claim 1, further comprising discriminately generating a first list including the UE receiving the coordinated multi-antenna transmission/reception service and a second list including said another UE not receiving the coordinated multi-antenna transmission/reception service.

5. The method of claim 1, wherein the group-specific information comprises parameters of uplink reference signals.

6. The method of claim 5, wherein the parameters of the uplink reference signals comprise one or more of a frequency band, cycle, and subframe configuration for transmission of the uplink reference signals.

7. The method of claim 5, wherein the parameters of the uplink reference signals are group-specific information, which enables generation of the uplink reference signals by independent times or codes corresponding to the cell in which the UE receiving the coordinated multi-antenna transmission/reception service is located and said another cell in which said another UE not receiving the coordinated multi-antenna transmission/reception service is located.

8. The method of claim 1, wherein one or more of the two or more base stations comprise a relay.

9. The method of claim 8, wherein the relay has physical cell identification information (ID) and transmits a synchronization channel, reference symbols, or reference signals.

10. The method of claim 4, further comprising generating, by the base station, independent group-specific parameters corresponding to the first list including the UE receiving the coordinated multi-antenna transmission/reception service and the second list including said another UE not receiving the coordinated multi-antenna transmission/reception service.

11. The method of claim 10, further comprising transmitting, by the base station, the generated independent group-specific parameters corresponding to the first list including the UE receiving the coordinated multi-antenna transmission/reception service and the second list including said another UE not receiving the coordinated multi-antenna transmission/reception service to the UE included in the first list and said another UE included in the second list.

12. A multi-antenna transmission/reception system comprising:
a serving base station to discriminate between a cell in which a User Equipment (UE) receiving a coordinated multi-antenna transmission/reception service enabling a communication with two or more base stations is located and another cell in which another UE not receiving the coordinated multi-antenna transmission/reception service is located, and to transmit different group-specific information, which is identified by codes different from codes of group-specific information of said another UE not receiving the coordinated multi-antenna transmission/reception service, to the UE receiving the coordinated multi-antenna transmission/reception service; and
the UE to transmit an uplink reference signal to the serving base station through a predetermined frequency band at a particular subframe determined by the different group-specific information.

13. The multi-antenna transmission/reception system of claim 12, wherein the UE receiving the coordinated multi-antenna transmission/reception service identifies the different group-specific information transmitted from the serving base station and generates the uplink reference signal by using an independent time or code, which is discriminated from an uplink reference signal transmitted by said another UE not receiving the coordinated multi-antenna transmission/reception service, according to the identified different group-specific information.

14. A method of receiving group-specific information of a base station by a User Equipment (UE) in a multi-antenna transmission/reception system, the method comprising:
receiving group-specific information from a base station by a first UE receiving a coordinated multi-antenna transmission/reception service enabling a communication with two or more base stations; and
generating an uplink reference signal by using the group-specific information and transmitting the uplink reference signal by the first UE,
wherein the group-specific information received by the first UE is discriminated from group-specific information received by a second UE not receiving the coordinated multi-antenna transmission/reception service.

15. The method of claim 14, wherein the group-specific information received by the first UE is discriminated by different times from the group-specific information received by the second UE not receiving the coordinated multi-antenna transmission/reception service.

16. The method of claim 14, wherein the group-specific information received by the first UE is discriminated by different codes from the group-specific information received by the second UE not receiving the coordinated multi-antenna transmission/reception service.

17. The method of claim 14, wherein the group-specific information received by the first UE is discriminated by different frequencies from the group-specific information received by the second UE not receiving the coordinated multi-antenna transmission/reception service.

18. The method of claim 14, wherein a list including the first UE and a list including the second UE are different from each other.

19. The method of claim 14, wherein the group-specific information comprises parameters of uplink reference signals.

20. The method of claim 19, wherein the parameters of the uplink reference signals comprise one or more of a frequency band, cycle, and subframe configuration for transmission of the uplink reference signals.

21. The method of claim 19, wherein the parameters of the uplink reference signals are group-specific information, which enables generation of the uplink reference signals by independent times or codes corresponding to the cell in which the first UE receiving the coordinated multi-antenna transmission/reception service is located and another cell in which the second UE not receiving the coordinated multi-antenna transmission/reception service is located.

22. The method of claim 14, wherein one or more of the two or more base stations comprise a relay.

23. The method of claim 22, wherein the relay has physical cell identification information (ID) and transmits a synchronization channel, reference symbols, or reference signals.

24. The method of claim 19, wherein group-specific parameters allocated to the list including the first UE receiving the coordinated multi-antenna transmission/reception service are independent to group-specific parameters allocated to the list including the second UE not receiving the coordinated multi-antenna transmission/reception service.

25. The method of claim 24, further comprising receiving, by the first UE, the independent group-specific parameters corresponding to the list including the first UE receiving the coordinated multi-antenna transmission/reception service and the list including the second UE not receiving the coordinated multi-antenna transmission/reception service, from the base station.

26. A method of transmitting parameters by a first base station transmitting or receiving data to or from a plurality of UEs in a coordinated multi-antenna transmission/reception system, the method comprising:
transmitting a first parameter required for generation of a reference signal to be transmitted by a first UE, which will transmit or receive data to or from the first base station, to the first UE by the first base station;
transmitting a second parameter required for generation of a reference signal to be transmitted by a second UE, which will transmit or receive data to or from the first base station and a second base station, to the second UE by the first base station;
receiving a first reference signal generated based on the first parameter from the first UE by the first base station; and
receiving a second reference signal, which is generated based on the second parameter and is different from the first reference signal, from the second UE by the first base station.

27. The method of claim 26, further comprising:
receiving information required for determination of the second parameter from the second base station by the first base station; and
transmitting the second parameter to the second base station by the first base station.

28. The method of claim 27, wherein the information required for determination of the second parameter received from the second base station comprises parameter information required for generation of a reference signal by a third UE, and the third UE transmits or receives data to or from the second base station and does not transmit or receive data to or from the first base station.

29. The method of claim 26, wherein the first base station and the second base station are included in the coordinated multi-antenna transmission/reception system.

30. The method of claim 26, wherein one or more of codes, frequencies, and times are different from each other between the first reference signal and the second reference signal.

31. The method of claim 26, wherein the first parameter and the second parameter belong to different code resource groups, respectively.

32. The method of claim 26, wherein the second reference signal transmitted by the second UE is different from a third reference signal transmitted by a third UE, and the third UE transmits or receives data to or from the second base station and does not transmit or receive data to or from the first base station.

33. The method of claim 32, wherein the third reference signal is generated based on a third parameter different from the second parameter.

34. The method of claim 26, wherein the first base station or the second base station is a relay.

35. A method of transmitting reference signals by a UE transmitting or receiving data to or from one or more base stations in a coordinated multi-antenna transmission/reception system, the method comprising:
receiving a first parameter, required for generation of a reference signal by a first base station, from the first base station;
generating and transmitting a first reference signal generated based on the first parameter;
receiving a second parameter different from the first parameter from the first base station or a second base station in order to transmit or receive data to or from the first base station and the second base station; and
generating and transmitting a second reference signal generated based on the second parameter.

36. The method of claim 35, wherein the first base station and the second base station are included in the coordinated multi-antenna transmission/reception system.

37. The method of claim 35, wherein one or more of codes, frequencies, and times are different from each other between the first reference signal and the second reference signal.

38. The method of claim 35, wherein the first parameter and the second parameter belong to different code resource groups, respectively.

39. The method of claim 35, wherein the first base station or the second base station is a relay.

40. A method of transmitting reference signals in a coordinated multi-antenna transmission/reception system, the method comprising:
receiving a first parameter required for generation of a reference signal from a first base station or a second base station;
generating and transmitting a first reference signal generated based on the first parameter;
transmitting and receiving data to and from the first base station and the second base station;
receiving a second parameter different from the first parameter from the first base station; and
generating and transmitting a second reference signal generated based on the second parameter.

41. The method of claim 40, further comprising, after generating and transmitting of the first reference signal, stopping transmission or reception of data with the second base station.

42. The method of claim 40, wherein the first base station and the second base station are included in the coordinated multi-antenna transmission/reception system.

43. The method of claim 40, wherein one or more of codes, frequencies, and times are different from each other between the first reference signal and the second reference signal.

44. The method of claim 40, wherein the first parameter and the second parameter belong to different code resource groups, respectively.

45. The method of claim 40, wherein the first base station or the second base station is a relay.

46. A method of transmitting parameters in a coordinated multi-antenna transmission/reception system, the method comprising:
transmitting a first parameter, required for generation of a reference signal to be transmitted by a first UE and a second UE, to the first UE and the second UE by a first base station;
detecting, by the first base station, that the first UE receives a coordinated multi-antenna transmission/reception service;
transmitting a second parameter, required for generation of a reference signal to be transmitted by a second UE, to the second UE by the first base station;
receiving a first reference signal generated based on the first parameter from the first UE by the first base station; and
receiving a second reference signal, which is generated based on the second parameter and is different from the first reference signal, from the second UE by the first base station.
